# EUROPEAN PATENT APPLICATION

(11) **EP 1 199 326 A2**
(43) Date of publication of application: **24.04.2002**
(21) Application number: 01124209.6
(22) Date of filing: 12.10.2001
(51) Int. Cl.: C08J 3/07, C08J 5/18, C08F 2/06, C08F 246/00

(54) **Aqueous polymer solution**

(30) Priority: 17.10.2000 US 690387
(71) Applicant: National Starch and Chemical Investment Holding Corporation, New Castle, Delaware 19720 (US)
(72) Inventor: Eknoian, Michael, Warren, New Jersey 07059 (US)
(74) Representative: Held, Stephan, Dr.rer.nat., Dipl.-Chem.

(57) **Abstract**

The present invention is directed to an aqueous polymer composition comprising a copolymer and water, the copolymer containing at least one hydrophilic base-neutralizable monomer and at least one hydrophobic ethylenically unsaturated monomer. The polymer composition is clear, and a film formed from the composition is insoluble in water once formed, and contains essentially no crosslinking. The polymer composition is formed by polymerizing the hydrophilic monomer and hydrophobic monomer in a non-aqueous solvent; forming an aqueous polymer dispersion from the non-aqueous polymer solution, and adding a volatile base to form a clear aqueous polymer composition. The volatile base can be added either before or after the solvent strip.

The polymer composition is useful as a replacement for thermoset resins, and can be used to stabilize emulsions to produce a surfactant- and colloid-free latex.

## Description

The present invention relates to an aqueous polymer composition capable of forming a film which is insoluble in water, and essentially free of crosslinking. In particular the polymer composition contains a copolymer of a hydrophilic base-neutralizable monomer and a hydrophobic ethylenically unsaturated monomer. The polymer composition is useful as a replacement for thermoset resins, and as an emulsion stabilizer or hydrophobizing agent.

### BACKGROUND OF THE INVENTION

Polymer coatings are used in applications from paints to hair fixatives to time-release coatings. Polymer coatings can be produced from a clear solution of a polymer in a non-aqueous solvent, such as lacquers. For ecological reasons, however, aqueous polymer solutions or emulsions are preferred over those based on organic solvents. For many applications it is desirable that the coatings are fast-drying, and are resistant to water.

Emulsion polymerization requires the use of surface active agents or colloid stabilizers for stabilization of the polymer particles. The emulsion stabilizers tend to migrate to the surface during and after film formation, causing performance limitations of the film in areas such as water resistance. There are many examples of fast-drying emulsions producing water insoluble films, including those found in U.S. Patent Numbers 4,119,600; 5,527,853; 5,820,993; 5,861,188; 5,922,398; and 6,013,721. Each of these compositions requires an emulsion polymer, a polyfunctional amine, and a volatile base. The polyfunctional amine serves to crosslink the polymer during film formation, and thus providing water resistance.

Japanese Patents 4,320,467; 4,335,070; and 4335,071 describe water-borne printing inks containing a binder that is in an aqueous solution. A volatile base is used to dissolve or disperse the polymers into water. There is no mention of water resistance, and the polymer compositions contain exotic monomers, such as polyethylene glycol methacrylate, used to chelate dyes for the printing inks.

U.S. Patent Numbers 4,923,514; 4,960,463; and 6,040,409 disclose aqueous floor polish compositions for wax replacements. These polymers are neutralized with a volatile base. The polymers contain acid levels much higher than those of the present invention, and the polymers are soluble in alkali solutions.

U.S. Patent Number 5,312,883 discloses an acrylic acid polymer which is soluble in tap water, but insoluble in an aqueous solution containing 0.5 percent or more of a neutral inorganic salt.

U.S. Patent Number 5,631,317 discloses a process for producing a self-dispersing and salt-sensitive polymer by polymerizing acrylic acid, a C₈₋₁₂ (meth)acrylate, and a C₂₋₄ (meth)acrylate, in a mixed 50-90 percent organic solvent miscible with water and 10-50 percent water, followed by neutralization of between 2 and 15 molar percent of the acrylic acid and distilling off the organic solvent and adding water. The process of the present invention produces a film which is not dependent on salt concentration for solubility, but is soluble in water

Surprisingly it has been found that a copolymer film formed from an aqueous polymer composition, is insoluble in water after film-formation, without the existence of crosslinking. Said polymer offers advantages over current technologies since it requires no external energy to facilitate a chemical crosslinking reaction or a curing mechanism to crosslink, plus limitations of latex such as particle coalescence, ease of production, and stabilization are eliminated. These polymers are excellent candidates as replacements for thermoset resins from both a commercial and environmental standpoint.

### SUMMARY OF THE INVENTION

The present invention is directed to an aqueous polymer composition comprising a copolymer and water, where the copolymer comprises at least one base-neutralizable monomer and at least one hydrophobic ethylenically unsaturated monomer, wherein the polymer composition is clear, wherein a film formed from the polymer composition is insoluble in water once formed, and wherein said film contains essentially no crosslinking.

Another embodiment of the invention is a process for producing the polymer composition of the present invention comprising:
A) polymerizing at least one hydrophilic base-neutralizable monomer and at least one hydrophobic ethylenically unsaturated monomer in a non-aqueous solvent to form a non-aqueous polymer solution;
B) forming an aqueous polymer dispersion from said non-aqueous polymer solution; and
C) adding an aqueous volatile base,
to form a clear aqueous polymer composition, wherein a film formed from the polymer composition is insoluble in water once formed, and wherein the film contains essentially no crosslinking. The process can also involve adding the volatile base prior to forming the aqueous dispersion.

A further embodiment of the invention is a polymer emulsion which is stabilized with the aqueous polymer composition of this invention.

### DETAILED DESCRIPTION OF THE INVENTION

The present invention is directed to an aqueous polymer composition comprising a copolymer and water. The copolymer is synthesized from at least one hydrophilic base-neutralizable monomer, and at least one hydrophobic ethylenically unsaturated monomer.

Hydrophilic base-neutralizable monomers are selected from one or more carboxylic, dicarboxylic, sulfonic, and phosphonic acids, or mixtures thereof. Examples of said monomers useful in the present invention include, but are not limited to acrylic acid, methacrylic acid, maleic anhydride, itaconic acid, crotonic acid, styrene sulfonic acid, 2-acrylamido-2-methylpropane sulfonic acid, vinyl sulfonic acid, ethacrylic acid, alpha-chloro-acrylic acid, alpha-cyano acrylic acid, beta methyl-acrylic acid (crotonic acid), alpha-phenyl acrylic acid, sorbic acid, alpha-chloro sorbic acid, angelic acid, cinnamic acid, p-chloro cinnamic acid, beta-styryl acrylic acid (1-carboxy-4-phenyl butadiene-1,3), itaconic acid, maleic acid, citraconic acid, mesaconic acid, glutaconic acid, aconitic acid, fumaric acid, tricarboxy ethylene, 2-acryloxypropionic acid, vinyl sulfonic acid, phosphoric acid, vinyl phosphonic acid, methallyl sulfonic acid, sulfonated styrene, and allyloxybenzenesulfonic acid.

Preferably the hydrophilic based-neutralizable monomer is acrylic acid or methacrylic acid. The hydrophilic monomer is preferably present in the aqueous polymer composition at from 5 to 20 percent by weight, based on the weight of the polymer. When the level of hydrophillic monomer is above 20 percent by weight, films produced from the polymer solution yield high water solubility.

The hydrophobic monomer can be any ethylenically unsaturated monomer, or mixture thereof. Examples of such monomers include, but are not limited to:

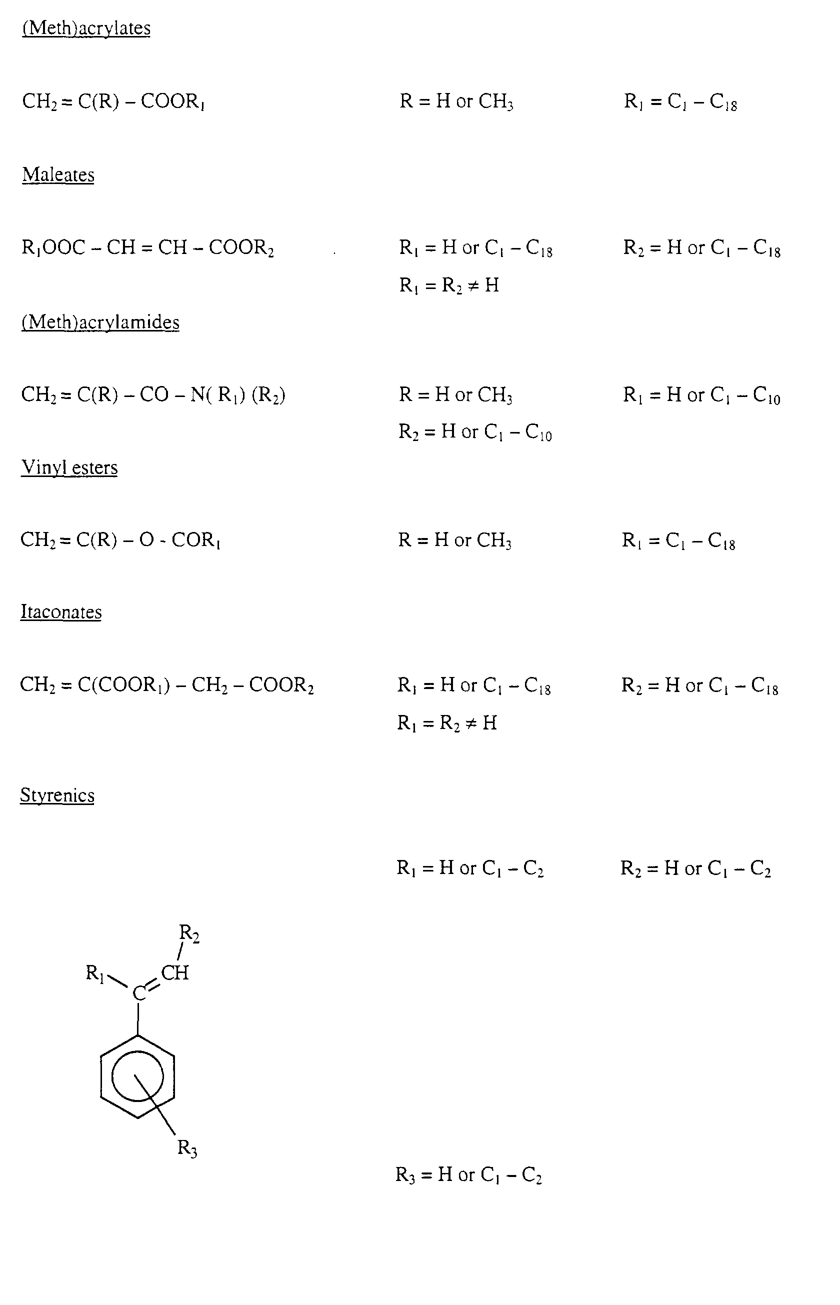

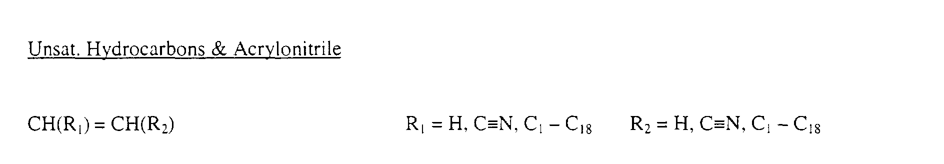

### Nitrogen Functional

(Meth)acrylamide, N-Methyl (meth)acrylamide, N-Ethyl (meth)acrylamide, N-Propyl (meth)acrylamide, N-Butyl (meth)acrylamide, N-t-Octyl (meth)acrylamide, N,N-Dimethyl (meth)acrylamide, N,N-Diethyl (meth)acrylamide, N,N-Dipropyl (meth)acrylamide, N,N- Dibutyl (meth)acrylamide, N,N-Di t-octyl (meth)acrylamide, 2-(Dimethylamino)ethyl (methacrylate), N-[3-(Dimethylamino)propyl] (meth)acrylamide, N-methoyl(meth)acrylamide, N-(isobutoxymethyl)acrylamide, Acrylonitrile, N-vinyl formamide, Vinyl pyrrolidone, N-caprolactam, t-Octyl (meth)acrylamide, those skilled in the art can envision linear and branched versions as well as higher alkyl chains.

### Vinyl Esters

Vinyl formate, vinyl acetate, vinyl propionate, vinyl isobutyrate, vinyl pivalate, vinyl 2-ethylhexonate, vinyl p-t-butyl benzoate, vinyl ester of versatic acid (i.e. Veo Va 10, Veo Va 11, Veo Va 12), vinyl laurate, vinyl sterate, vinyl eichoanate, vinyl docosanate, those skilled in the art can envision linear and branched versions as well as higher alkyl chains.

### Alcohol Functional

1-Hydroxymethyl (meth)acrylate, 2-hydroxymethyl (meth)acrylate, 1-hydroxyethyl (meth)acrylate, 2-hydroxyethyl (meth)acrylate, 1-hydroxypropyl (meth)acrylate, 2-hydroxypropyl (meth)acrylate, 3-hydroxypropyl (meth)acrylate, those skilled in the art can envision linear and branched versions as well as higher alkyl chains.

### Unsaturated Hydrocarbons

Ethylene, propylene, butylene, butadiene, those skilled in the art can envision linear and branched versions as well as higher alkyl chains.

### (Meth)acrylates

methyl (meth)acrylate, ethyl (meth)acrylate, propyl (meth)acrylate, butyl (meth)acrylate, pentyl (meth)acrylate, hexyl (meth)acrylate, heptyl (meth)acrylate2-ethyl hexyl (meth)acrylate, octyl (meth)acrylate, t-octyl (meth)acrylate, nonyl (meth)acrylate, decyl (meth)acrylate, isobornyl (meth)acrylate, lauryl (meth)acrylate, steryl (meth)acrylate, cyclohexyl(meth)acrylate 1-Hydroxymethyl (meth)acrylate, 2-hydroxymethyl (meth)acrylate, 1-hydroxyethyl (meth)acrylate, 2-hydroxyethyl (meth)acrylate, 1-hydroxypropyl (meth)acrylate, 2-hydroxypropyl (meth)acrylate, 3-hydroxypropyl (meth)acrylate.

Preferred monomers are vinyl monomers and acrylate monomers such as methyl methacrylate, butyl acrylate. The copolymer preferably has a weight average molecular weight of under 100,000, preferably from 10,000 to 50,000, and most preferably from 20,000 to 40,000; as measured by GPC using polystyrene standards and a SHOWDEX KF806L column.

The aqueous polymer composition of the invention is a clear solution, as opposed to a latex or emulsion polymer composition.

A film formed from said polymer composition is insoluble in water. Insoluble, as used herein, means that less than 50 percent of the polymer film dissolves in boiling water after 2 hours, or less than 5 percent of the polymer film dissolves in water at room temperature after 2 hours. A film may be formed from the aqueous polymer composition by applying a thin layer to a substrate, and allowing the layer to dry into a film. Drying may be accelerated through the use of elevated temperature.

A film formed from said polymer composition is also insoluble in aqueous base, aqueous acid and aqueous salt solution. Insolubility in aqueous salt solution means that less than 50 percent of the polymer film dissolves in boiling salt water after 2 hours, or less than 5 percent of the polymer film dissolves in salt water at room temperature after 2 hours. Insoluble in an aqueous base means that less than 50 percent of the polymer film dissolves in aqueous base water at room temperature after 2 hours. Insoluble in aqueous acid means that less than 20 percent of the polymer film dissolves in boiling aqueous acid after 2 hours, or less than 1 percent of the polymer film dissolves in aqueous acid at room temperature after 2 hours.

The polymer film, according to the invention contains essentially no crosslinking. Crosslinking, as used herein, refers to a chemical crosslink. The absence of crosslinking is confirmed since the polymer films, though insoluble in water, dissolve in the solvent in which the polymer was originally formed. Dissolution of the film in the original solvent means that at least 80 percent of the film dissolved in refluxing solvent within 2 hours.

The present invention also relates to a process for producing an aqueous polymer composition which is clear, and forms a film which is insoluble in water and contains essentially no crosslinking. The process involves polymerizing at least one hydrophilic base-neutralizable monomer and at least one hydrophobic etheylenically unsaturated monomer in a non-aqueous solvent; forming an aqueous polymer dispersion from said non-aqueous polymer solution; and adding an aqueous volatile base to form a clear aqueous polymer composition. The addition of the volatile base can occur either before, after, or during the formation of the aqueous polymer dispersion from the non-aqueous polymer solution.

The polymerization of the monomers in a non-aqueous solvent can be done by any means known in the art. The solvent should be miscible with water. Preferably the solvent is capable of forming an azeotrope with water. Examples of solvents useful in the present invention include, but are not limited to, alcohols such as methanol, ethanol, and isopropyl alcohol; and acetone. Preferably the residual solvent is present in the polymer solution at below 10 percent by weight, and most preferably below 5 percent by weight, based on the weight of the solution. This preference is based on regulatory limits on flammability for labeling purposes.

Formation of the aqueous polymer dispersion from the non-aqueous polymer solution can occur by several means. First is by the addition of water, or aqueous volatile base, to such an extent that the weight of water in the composition becomes greater that the weight of non-aqueous solvent. Second is by the addition of water or aqueous volatile base, plus a stripping off of the solvent or an azeotrope of the solvent. In whatever means the aqueous polymer solution is formed from the non-aqueous polymer solution, the result is a solution containing at least 50 percent water, based on the total weight of water and non-aqueous solvent. Preferably water is present at 75 percent by weight or greater, based on the total weight of water and non-aqueous solvent.

The final aqueous polymer composition is formed by the combination of the conversion of the polymer solution to an aqueous solution, and the addition of a volatile base, resulting in a clear composition. The volatile base useful herein is one that can be evaporated from the solution, or a mixture of said bases. Such bases include, but are not limited to, ammonia, morpholine, the lower alkyl amines, lower alkanol amines, diethananol amine, ethanol amine, 2-dimethylaminoethanol, N-methylmorpholine, and ethylenediamine. Preferred bases include ammonia or ammonium hydroxide, and ethanol amine. The volatile base is used in an amount effective to neutralize from 20 - 100 percent of the base-neutralizable groups on the polymer. Preferably the volatile base is present in an amount effective to neutralize from 50 to 100 percent of the base-neutralizable groups on the polymer.

A further embodiment of the invention is the use of the aqueous polymer composition as a stabilizer for emulsions. The aqueous polymer composition can be used as a replacement for surfactants and colloids currently used in the art for stabilizing emulsions. Such emulsions provide a surfactant-free latex without limitations on water resistance and other properties found in emulsions stabilized with surfactants or colloids.

In addition to being useful as a colloid stabilizer for emulsion polymerization, the polymer solution of the present invention is useful in many other applications including, but not limited to: a phenolic resin replacement; anti-blocking agents in paints; hair fixatives; skin creams; inks; protective top coats; adhesive binders; aqueous nail polish; glass specialties, time release and erodible coatings or particles; dispersants; binders for non-wovens, textiles and paper; water-resistant coatings.

The following examples are presented to further illustrate and explain the present invention and should not be taken as limiting in any regard.

### Example 1

139.8 grams isopropanol were added to a 2-L four-neck flask equipped with a condenser, thermometer, and stainless steel paddle agitator. The solution was stirred and purged with a gentle stream of nitrogen for 15 minutes. After the purge ended, the solution was heated to reflux and once a steady reflux was obtained 66.0 grams methyl methacrylate, 20.0 grams butyl acrylate, and 14.0 grams acrylic acid were added over 2.0 hours via monomer pump. Simultaneously 8.0 grams of isopropanol and 3.0 grams VAZO 67 (2,2'-azobis(2-methylbutyronitrile)were added over 2.5 hours via syringe pump. The reaction was maintained at reflux temperature and the contents were held at reflux for 15 minutes after the initiator slow-addition finished. The flask was then equipped with a Dean-Stark trap and approximately 100.0 grams isopropanol was stripped off. The contents were then cooled to 60°C and a solution of 140.0 grams deionized water and 11.5 grams of a 29.5% ammonium hydroxide solution were added with good agitation. The polymer dissolved readily, and the contents were heated to reflux and the remaining isopropanol was removed. The solution was cooled to room temperature. The resulting solution polymer was 24.5% solids with a pH of 7.1 and had a viscosity of 430 cPs, at 25°C. The polymer, once dried was insoluble in caustic and boiling water.

### Example 2

The polymerization was conducted in the same manner as Example 1 except that 90.0 grams methyl methacrylate and 10.0 grams acrylic acid were used as the monomers. The resulting solution polymer was 20.2% solids with a pH of 8.7 and a viscosity of 885 cPs. The polymer, once dried was insoluble in caustic and boiling water.

### Example 3

The polymerization was conducted in the same manner as Example 1 except that 85.0 grams butyl acrylate and 15.0 grams acrylic acid were used as the monomers. The resulting solution polymer was 35.2% solids with a pH of 9.3 and a viscosity of 1100 cPs. The polymer, once dried was insoluble in caustic and boiling water.

### Example 4

The polymerization was conducted in the same manner as Example 1 except that 40.0 grams methyl methacrylate, 40.0 grams butyl acrylate, and 20.0 grams acrylic acid were used as the monomers, and the solvent used was changed from isopropanol to acetone. Also 2.0 grams dodecyl mercaptan was used to control the molecular weight of the polymer. The resulting solution polymer was 20.0% solids with a pH of 10.3 and a viscosity of 122 cPs. The polymer, once dried was insoluble in caustic and boiling water.

### Example 5

The polymerization was conducted in the same manner as Example 4 except that 50.0 grams methyl methacrylate, 40.0 grams butyl acrylate, and 10.0 grams acrylic acid were used as the monomers. The resulting solution polymer was 20.0% solids with a pH of 10.2 and a viscosity of 3250 cPs. The polymer, once dried was insoluble in caustic and boiling water.

### Example 6

111.84 grams isopropanol and 27.96 grams deionized water were added to a 2-L four-neck flask equipped with a condenser, thermometer, and stainless steel paddle agitator. The solution was stirred and purged with a gentle stream of nitrogen for 15 minutes. After the purge ended, the solution was heated to reflux and once a steady reflux was obtained 66.0 grams methyl methacrylate, 20.0 grams butyl acrylate, and 14.0 grams acrylic acid were added over 2.0 hours via monomer pump. Simultaneously 12.0 grams of deionized water and 2.0 grams sodium persulfate were added over 2.5 hours via syringe pump. The reaction was maintained at reflux temperature and the contents were held at reflux for 15 minutes after the initiator slow-addition finished. The flask was then equipped with a Dean-Stark trap and approximately 100.0 grams isopropanol was stripped off. The contents were then cooled to 60°C and a solution of 140.0 grams deionized water and 11.5 grams of a 29.5% ammonium hydroxide solution were added with good agitation. The polymer dissolved readily, and the contents were heated to reflux and the remaining isopropanol was removed. The solution was cooled to 30°C and the viscosity was adjusted with water if necessary. The resulting solution polymer was 24.5% solids with a pH of 7.1 and had a viscosity of 430 cPs. The polymer, once dried was insoluble in caustic and boiling water.

### Example 7

The polymerization was conducted in the same manner as Example 6 except that 30.0 grams methyl methacrylate, 60.0 grams butyl acrylate, and 10.0 grams acrylic acid were used as the monomers. The resulting solution polymer was 22.3% solids with a pH of 10.2 and a viscosity of 750 cPs. The polymer, once dried was insoluble in caustic and boiling water

### Example 8

The polymerization was conducted in the same manner as Example 6 except that 30.0 grams methyl methacrylate, 60.0 grams butyl acrylate, and 10.0 grams methacrylic acid were used as the monomers. The resulting solution polymer was 21.4% solids with a pH of 9.9 and a viscosity of 263 cPs. The polymer, once dried was insoluble in caustic and boiling water

### Example 9 (Use as a colloid)

137.38 grams of the polymer solution from Example 1 and 74.1 grams deionized water were added to a 2-L four-neck flask equipped with a condenser, thermometer, and stainless steel paddle agitator. The solution was purged with a gentle stream of nitrogen for 15 minutes, then heated to 60°C with a water bath. Next, 19.25 grams of the polymer solution from Example 1 and 62.0 grams deionized water were mixed and to that solution were added 50.0 grams butyl acrylate and 50.0 grams methyl methacrylate. This monomer pre-emulsion was then added over 2.5 hours via monomer pump and the reaction temperature was maintained at 60°C throughout. Simultaneously with the addition of the monomer pre-emulsion were added a solution of 20.0 grams deionized water and 0.23 grams sodium formaldehyde sulfoxylate and a solution of 15.0 grams deionized water and 0.64 grams of t-butyl hydroperoxide. The redox initiator was added via syringe pump over 3.0 hours. The reaction was held for 15 minutes after all slow additions finished at 60°C, then 15.0 grams deionized water and 0.64 grams t-butyl hydroperoxide were added as a shot and the solution was allowed to equilibrate for 5 minutes. Then 9.2 grams deionized water and 0.46 grams sodium formaldehyde sulfoxylate were added over 5 minutes, and the solution was allowed to equilibrate for 10 minutes. The resulting emulsion was 28.9% solids with a pH of 8.0, a viscosity of 26 cPs, an average particle size of 94 nm, and had < 0.01% coagulum. The dried films had no surface tack and were completely insoluble in caustic and boiling water.

### Example 10

The polymerization was conducted in the same manner as Example 9 except that the colloid was the polymer in Example 2 and 50.0 grams 2-ethylhexyl acrylate and 50.0 grams butyl acrylate were used as the monomers. The resulting emulsion was 34.5% solids with a pH of 8.6 and a viscosity of 56 cPs. The dried films had no surface tack and were completely insoluble in caustic and boiling water.

### Example 11

The polymerization was conducted in the same manner as Example 9 except 50.0 grams methyl methacrylate and 50.0 grams butyl acrylate were used as the monomers. The resulting emulsion was 44.1% solids with a pH of 8.0 and a viscosity of 38 cPs. The dried films had no surface tack and were completely insoluble in caustic and boiling water.

### Comparative Example 1

The polymerization was conducted in the same manner as Example 1 except that 80.0 grams methyl methacrylate and 20.0 grams acrylic acid were used as the monomers. The resulting solution polymer was 30.3% solids with a pH of 7.2 and a viscosity of 5040 cPs. The polymer, once dried was soluble in caustic and boiling water.

### Comparative Example 2

The polymerization was conducted in the same manner as Example 1 except that 90.0 grams methyl methacrylate and 10.0 grams acrylic acid were used as the monomers, and the base used was sodium hydroxide instead of ammonium hydroxide. The resulting solution polymer was 25.4% solids with a pH of 8.1 and a viscosity of 140 cPs. The polymer, once dried was soluble in caustic and boiling water.

### Comparative Example 3

The polymerization was conducted in the same manner as Example 4 except that no dodecyl mercaptan was used. The resulting polymer was not a solution but an emulsion and did not disperse readily in the basic water solution.

### Comparative Example 4

The polymerization was conducted in the same manner as Example 1 except that 75.0 grams lauryl acrylate and 25.0 grams acrylic acid were used as the monomers.. The resulting solution polymer was 15.4% solids with a pH of 8.1 and a viscosity of 140 cPs. The polymer, once dried was soluble in caustic and boiling water.

### Example 12

3 Mil thick wet films from above examples were cast on a glass plate, and dried at room temperature overnight or at 130°C for 5 minutes. Next, 1.0 gram was placed in a flask with 100.0 grams deionized water. The solution was heated to reflux for 2 hours, then filtered and % solids were determined on the filtrate to calculate the % insoluble polymer. The caustic insolubles were determined in a similar manner using 25% by weight NaOH for 2 hours at room temperature. The examples show that films cast from polymer compositions of the present invention are insoluble in water and caustic, while comparative films are soluble in water. The results are tabulated below:

**Table 1.**

| Water Sensitivity of Solution Polymers | | | |
|---|---|---|---|
| | Drying Method | % Insolubles (Boiling Water) | % Insolubles (RT 25% NaOH) |
| Example 1 | Air Dry Overnight | 65% | |
| Example 1 | 130°C for 5 minutes | 70% | 55% |
| Example 2 | 130°C for 5 minutes | 70% | |
| Example 3 | 130°C for 5 minutes | 97% | |
| Example 4 | 130°C for 5 minutes | 80% | |
| Example 7 | 130°C for 5 minutes | 100% | 62% |
| Example 8 | 130°C for 5 minutes | 95% | |
| Comparative Example 1 | Air Dry Overnight | 15% | |
| Comparative Example 1 | 130°C for 5 minutes | 20% | 0% |
| Comparative Example 2 | 130°C for 5 minutes | 0% | |

### Example 13

Films cast in the same manner as Example 12 were added to isopropanol or acetone to make a 1% polymer solution. The solvent was heated to reflux for 2 hours and the solution filtered and % solids of the filtrate were determined to calculate the % insoluble polymer. The results show that films formed from the polymer compositions of the invention, while insoluble in water, are soluble in the solvent from which they are formed, indicating a lack of crosslinking. The results are tabulated below:

| | Drying Method | % Insolubles | Solvent |
|---|---|---|---|
| Example 1 | Air Dry Overnight | <1% | Isopropanol |
| Example 1 | 130°C for 5 minutes | <1% | Isopropanol |
| Example 4 | 130°C for 5 minutes | <1% | Acetone |
| Comparitive Example 1 | 130°C for 5 minutes | <1% | Isopropanol |

## Claims

1. An aqueous polymer composition comprising a copolymer and water, wherein said copolymer comprises at least one hydrophilic base-neutralizable monomer and at least one hydrophobic ethylenically unsaturated monomer, wherein said polymer composition is clear, wherein a film formed from said polymer composition is insoluble in water once formed, and wherein said film contains essentially no crosslinking.

2. The polymer composition of claim 1 wherein said base-neutralized monomer is present in said copolymer at from 5 to 20 percent by weight, based on the weight of the copolymer.

3. The polymer composition of claim 1 wherein said copolymer is an acrylate polymer.

4. The polymer composition of claim 1 wherein the weight average molecular weight of said copolymer is from 10,000 to 50,000.

5. An emulsion polymer comprising the aqueous polymer composition of claim 1, said emulsion being essentially free of any surfactant.

6. A process for producing the polymer solution of Claim 1 comprising:
A) polymerizing at least one hydrophilic base-neutralizable monomer and at least one hydrophobic ethylenically unsaturated monomer in a non-aqueous solvent to form a non-aqueous polymer solution;
B) forming an aqueous polymer dispersion from said non-aqueous polymer solution; and
C) adding an aqueous volatile base,
to form a clear aqueous polymer composition, wherein a film formed from said polymer composition is insoluble in water once formed, and wherein said film contains essentially no crosslinking.

7. The process of claim 6 wherein the aqueous volatile base of step C is added prior to or during, rather than following, step B.

8. The process of claim 6 wherein said aqueous polymer solution is formed by adding water to the non-aqueous polymer solution of step A, followed by stripping of said non-aqueous solvent.

9. The process of claim 6 wherein said base is added in an amount providing from 20 percent to 100 percent neutralization of said acid monomer.

10. The process of claim 6 wherein said non-aqueous solvent is selected from the group comprising acetone, a water soluble or miscible alcohol, or mixtures thereof.
